# EUROPÄISCHE PATENTSCHRIFT

(11) **EP 0 885 921 B1**
(45) Veröffentlichungstag und Bekanntmachung des Hinweises auf die Patenterteilung: **27.12.2006**
(21) Anmeldenummer: 98110877.2
(22) Anmeldetag: 15.06.1998
(51) Int. Cl.: C08L 83/04, C08K 5/01

(54) **RTV-Siliconkautschuk-Mischungen**
RTV-curable silicone rubber mixtures
Mélange de caoutchouc de silicone durcissable à température ambiante

(30) Priorität: 19.06.1997 DE 19725971
(43) Veröffentlichungstag der Anmeldung: 23.12.1998
(73) Patentinhaber: Wacker Chemie AG, 81737 München (DE)
(72) Erfinder: Schurig, Gabriele, 01662 Meissen (DE); Scheim, Uwe, Dr. rer. nat., 01640 Coswig (DE)

(56) Entgegenhaltungen:
- EP-A- 0 807 667
- EP-A1- 0 508 464
- DE-A1- 2 908 036
- DE-A1- 3 342 026
- DE-C1- 3 342 027
- US-A- 4 187 206
- SHELL CANADA: "Lubricants Report, Shellflex oils" WEB PAGE, XP002119271
- SUNOCO CORPORATION: "Sunpar series" WEB PAGE, XP002119272
- "Chambers Dictionary of Science and Technology, page 788"
- gefunden im HTTP://WWW.THEFREEDICTIONARY.COM/NAPHTHENE
- "Total Hydroseale" Februar 1996 (1996-02), TOTAL * das ganze Dokument *

## Beschreibung

Die Erfindung betrifft RTV-Siliconkautschuk-Mischungen, in denen als Weichmacher ein im wesentlichen paraffinisches Kohlenwasserstoffgemisch verwendet wird.

Unter Ausschluss von Wasser lagerfähige, bei Zutritt von Wasser bei Raumtemperatur zu Elastomeren vulkanisierende Ein- oder Zweikomponenten-Siliconkautschukmischungen (RTV1 bzw. RTV2) sind bekannt Sie bestehen aus einem Polyorganosiloxan, einem Vernetzer, einen Weichmacher und ggf. weiteren Zusätzen, wie Katalysatoren, Pigmente, Verarbeitungshilfsmittel und Füllstoffe. Befinden sich alle Komponenten in einer Mischung, liegt eine Einkomponenten-Siliconkautschukmischung (RTV1) vor. Diese Mischungen vulkanisieren bei Zutritt von Luftfeuchtigkeit und werden vorrangig in der Bauindustrie als Fugendichtmasse eingesetzt. Für bestimmte Anwendungsfälle, zum Beispiel bei der Aushärtung in sehr dicken Schichten oder wenn sehr kurze Aushärtezeiten benötigt werden, verwendet man Zweikomponentensysteme. Bei diesen Massen wird der Vernetzer separat aufbewahrt und erst kurz vor Gebrauch zur Mischung der anderen Komponenten zugegeben. Die Aushärtung erfolgt in diesem Falle durch eine Umsetzung von reaktiven Gruppen am Polyorganosiloxan mit dem Vernetzer in Gegenwart des Katalysators.

Als Polyorganosiloxane verwendet man polymere siliciumorganische Verbindungen, die im Durchschnitt mindestens zwei reaktive Gruppen, wie zum Beispiel OH-Gruppen, Alkoxy- oder Vinylgruppen im Molekül enthalten.

Als Vernetzer können z. B. Triacetoxysilane, Triaminosilanen, Trioximosilane, Trialkoxysilane oder Hydrogensilane verwendet werden.

Weichmacher beeinflussen die mechanischen Eigenschaften der ausgehärteten Silicongummis, beispielsweise erhöht sich durch den Zusatz von Weichmachern die Reißdehnung und die Härte wird verringert. Dieses Eigenschaftsbild ist für eine langanhaltende Funktionstüchtigkeit des Silikongummis bedeutsam. Wenn der Gummi zu hart ist und eine zu geringe Reißdehnung besitzt, dann kann er von den abzudichtenden Flächen abreißen oder auch in sich reißen. Um diesen positiven Einfluss des Weichmachers über einen sehr langen Zeitraum zu gewährleisten, ist es notwendig, dass er im Produkt verbleibt und nicht entweder als ölige Flüssigkeit oder in Gasform ausgeschieden wird. Das bedeutet, dass der Weichmacher mit den anderen Komponenten der Massen, insbesondere mit dem Polyorganosiloxan, gut verträglich sein muss und auch aufgrund eines zu niedrigen Siedepunktes nicht verdunsten darf.

Aus den angeführten Gründen werden deshalb überwiegend längerkettige, methylterminierte Polydimethylsiloxane verwendet, welche wegen ihrer ähnlichen chemischen Struktur ausgezeichnet mit den Polyorganosiloxanen verträglich und unter den Anwendungsbedingungen der Silikongummis nicht flüchtig sind. Die Herstellung dieser Verbindungen ist jedoch relativ aufwendig. Deshalb wird schon seit langem nach Stoffen gesucht, die es gestatten, zumindest einen Teil, möglichst aber das gesamte methylterminierte Polydimethylsiloxan in den Mischungen zu ersetzen.

Ein wichtiger Parameter für die Eignung eines Produktes als Weichmacher ist der sogenannte Volumenschwund. Er wird bestimmt, indem man den ausgehärteten Gummi eine gewisse Zeit bei erhöhter Temperatur lagert und dabei die Masse- und Dichteänderung beobachtet. Der Volumenschwund soll nicht größer als 10% sein. Darüber hinaus sollen die anderen Gebrauchseigenschaften, wie Aushärtegeschwindigkeit, Haftungsvermögen und Transparenz nicht negativ beeinflusst werden.

Es ist bekannt, mit aliphatischen Kohlenwasserstoffresten substituierte Aromaten, wie zum Beispiel Dodecylbenzol oder Didodecylbenzol, als Weichmacher in RTV-Siliconkautschuk-Mischungen zu verwenden (BR 89-03276, DE 29 08 036). Mit diesen Verbindungen ist es sogar möglich, das gesamte methylterminierte Polydimethylsiloxan in den Mischungen zu ersetzen. Der Nachteil der substituierten Aromaten ist jedoch, dass sie toxikologisch nicht unbedenklich sind und sich unter dem Einfluss von Licht verfärben.

Weiterhin ist die Verwendung organischer Weichmacher bekannt, die in anderen Kunststoffen schon seit langem mit Erfolg eingesetzt werden. So werden Trioctylphosphat (DE 28 02 170) und Carbonsäureester (DE 33 42 027) beschrieben. Diese organischen Substanzen haben den Nachteil, dass ihre Mischbarkeit mit dem verwendeten Polyorganosiloxan sehr begrenzt ist. So lässt sich jeweils nur ein kleiner Teil des methylterminierten Polydimethylsiloxans ersetzen, was den ökonomische Effekt vermindert. Außerdem kann es, bedingt durch die Unverträglichkeit mit dem Polyorganosiloxan, zu Problem bei der Substrathaftung kommen.

Ebenfalls als Weichmacher in RTV-Siliconkautschuk-Mischungen beschriebene Substanzklassen sind bestimmte Polyglykole, die unmodifiziert (DE 33 23 911) oder mit siliciumorganischen Resten modifiziert (EP 131 446) eingesetzt werden können. Diese Substanzklassen sind aufwendig in der Herstellung.

Übliche Praxis ist auch die Verwendung verhältnismäßig niedrigsiedener Kohlenwasserstoffgemische (Testbenzine). Diese Produkte besitzen jedoch eine solch hohe Flüchtigkeit, dass sie schon nach wenigen Wochen aus dem Gummi verdunstet sind und damit ihre Wirkung verloren geht. Der Volumenschwund solcher Produkte ist sehr hoch und liegt meist oberhalb 20%.

Auch die Verwendung von Mineralölprodukten als Weichmacher ist beschrieben. In DE 33 42 026 wird die Verwendung eines Öles mit einer Viskosität von 14,4 mm²/s bei 20°C, einem Siedebereich von 240°C bis 370°C und einer Zusammensetzung von 1% aromatischen, 45% naphthenischen und 54% paraffinischen Kohlenstoffatomen erwähnt. Die Mischbarkeit dieses Mineralöls mit den Siliconkomponenten ist aber so schlecht, dass zunächst eine Vormischung aus dem Polyorganosiloxan und dem Weichmacher hergestellt werden muss. Obwohl solche Vormischungen homogen erscheinen, kommt es erfahrungsgemäß dennoch beim ausgehärteten Produkt zum Ausölen des Weichmachers.

Es ist auch bereits beschrieben, Paraffinöle als Weichmacher zu verwenden (DE 23 64 856). Die Verträglichkeit der Paraffinöle mit Polyorganosiloxanen ist aber so schlecht, dass nur ganz geringe Mengen verwendet werden können.

Aus dem Stand der Technik lässt sich ableiten, dass Kohlenwasserstoffe, die alle Randbedingungen erfüllen, einen möglichst hohen polaren Anteil haben sollten. Das bedeutet, dass der Anteil von unpolaren, paraffinischen Kohlenstoffatomen möglichst klein sein sollte.

Die Aufgabe der Erfindung bestand daher darin, einen Weichmacher für RTV-Siliconkautschuk-Mischungen zu finden, der gut verträglich mit Polyorganosiloxanen ist und neben einem geringen Volumenschwund eine hohe Reißdehnung und geringe Härte aufweist.

Gegenstand der Erfindung sind RTV-Siliconkautschuk-Mischungen, in denen als Weichmacher ein im wesentlichen paraffinisches Kohlenwasserstoffgemisch verwendet wird.

Die RTV-Siliconkautschuk-Mischungen sind dadurch charakterisiert, dass als Weichmacher paraffinische Kohlenwasserstoffgemische in Mengen von 5 bis 30 Gew.-% verwendet werden, welche eine kinematische Viskosität von 5 mm²/s bis 10 mm²/s, gemessen bei 40°C, eine Viskositäts-Dichte-Konstante (VDK) kleiner 0,82 und einen Siedebeginn oberhalb 290°C aufweisen sowie 60 bis 80% paraffinische, 20 bis 40% naphthenische und maximal 1% aromatische Kohlenstoffatome und α,ω-Dihydroxypoly dimethylsiloxane mit Viskositäten zwischen 500 mPas und 350 000 mPas. enthalten.

Weitere Bestandteile der RTV-Siliconkautschuk-Mischungen sind:
(a) 30 bis 80 Gew.-% Polyorganosiloxane mit reaktiven Gruppen. Üblicherweise werden lineare hydroxylterminierte Polydiorganosiloxane eingesetzt, die entweder durch Polymerisation von cyclischen Siloxanen in Gegenwart stark basischer Katalysatoren und geringer Mengen Wasser oder durch Polykondensation von kurzkettigen linearen Oligomeren mit OH-Endgruppen hergestellt worden sind. Bevorzugte Organogruppen sind Methyl-, Ethyl-, Phenyl-, Vinyl- und Trifluorpropylreste. Obwohl die Verwendung rein linearer Polymere bevorzugt ist, können auch solche Polymere verwendet werden, die Verzweigungsstellen enthalten. Darüber hinaus können auch Polymere verwendet werden, die Dialkoxyorganosiloxygruppen enthalten. Üblich sind zum Beispiel Polydimethylsiloxane mit Dimethoxymethylsiloxy-Endgruppen. Weitere übliche Polymere sind solche mit Vinyl-Endgruppen. Besonders bevorzugt sind α,ω-Divinylpolydimethylsiloxane.
(b) 1 bis 5 Gew.-% Vernetzer. Übliche Vernetzer sind tri- oder tetrafunktionelle Silane mit leicht hydrolysierbaren Gruppen, wie z.B. Methyltriacetoxysilan, Ethyltriacetoxysilan, n-Propyltriacetoxysilan, Di-tert.-butoxydiacetoxysilan, Methyltris(methylethylketoximo)silan, Vinyltris(methylethylketoximo)silan, Tetrakis(methylethylketoximo)silan, Methyltrimethoxysilan, Methyltriethoxysilan, Tetraethoxysilan, Tetra-n-propoxysilan und Tetra-n-butoxysilan oder Verbindungen mit Si-H-Bindungen wie zum Beispiel 1,3,5,7-Tetramethylcylotetrasiloxan.
(c) 0,01 bis 5 Gew-% eines Katalysators um eine genügend hohe Vernetzungsgeschwindigkeit zu erreichen. Üblich sind Dialkylzinnverbindungen, wie z. B. Dibutylzinndilaurat oder -diacetat, bzw. Titanverbindungen, wie Tetrabutyl- oder Tetraisopropyltitanat oder Titanchelate, oder Platinverbindungen wie Hexachloroplatinsäure. Es können auch Katalysatorgemische eingesetzt werden.
(d) bis zu 30 Gew-% verstärkende Füllstoffe und/oder bis zu 60 Gew-% nichtverstärkende Füllstoffe zur Erzielung bestimmter mechanischer Eigenschaften. Bevorzugte Füllstoffe mit hoher spezifischer Oberfläche sind pyrogene Kieselsäure oder gefälltes Calciumcarbonat. Darüber hinaus können Füllstoffe mit geringer spezifischer Oberfläche als Extender verwendet werden. Bevorzugt ist hierbei gemahlenes Calciumcarbonat.
(e) bis zu 2 Gew.-% Haftvermittler, vorzugsweise mit funktionellen Gruppen substituierte Alkoxysilane. Besonders bevorzugt sind 3-Aminopropyltriethoxysilan, 3-(2-Aminoethyl)aminopropyltriethoxysilan und 3-Mercaptopropyltriethoxysilan. Es ist auch möglich, ein Gemisch von mit funktionellen Gruppen substituierter Alkoxysilane einzusetzen.
(f) weitere Zusätze, in Abhängigkeit vom Verwendungszweck der RTV1-Systeme können beispielsweise sein: Farbpigmente, Fungizide (jeweils bis zu 2 Gew.-%).

Die Mischungsherstellung kann kontinuierlich oder diskontinuierlich nach bekannten Verfahren erfolgen.

Es wurde gefunden, dass sich die erfindungsgemäßen, im wesentlichen paraffinischen Kohlenwasserstoffgemische ausgezeichnet als Weichmacher für RTV-Siliconkautschuk-Mischungen einsetzen lassen, was vollkommen überraschend war, da aufgrund des großen unpolaren Anteils in den Gemischen nach dem bisherigen Stand der Technik solche Kohlenwasserstoffgemische nicht verwendbar sein sollten. Sie sind jedoch mit den anderen Bestandteilen (a) bis (f) ohne Probleme mischbar, schwitzen nicht aus und haben eine so geringe Flüchtigkeit, dass der Volumenschwund beim Aushärten der RTV-Systeme bis zu einer Einsatzmenge von 30 Gew.-% stets kleiner als 10 % ist. Die anderen Gebrauchseigenschaften, wie Aushärtegeschwindigkeit, Haftungsvermögen und Transparenz werden nicht negativ beeinflusst.

### Ausführungsbeispiele

### Beispiel 1

1400 g eines α,ω-Dihydroxypolydimethylsiloxans mit einer Viskosität von 80.000 mPas (bei 25 °C), 600 g eines Kohlenwasserstoffgemisches mit einer kinematischen Viskosität von 6,2 mm²/s (bei 40 °C), einer Viskositäts-Dichte-Konstante (VDK) von 0,79 und einem Siedebereich von 300 °C bis 370 °C (Kohlenstoffverteilung 62 % paraffinische, 38 % naphthenische und 0,03 % aromatische Kohlenstoffatome), 90 g Ethyltriacetoxysilan und 190 g einer pyrogenen Kieselsäure mit einer spezifischen Oberfläche von 150 m²/g wurden in einem Planetenmischer homogen im Vakuum vermischt. Anschließend wurden 0,5 g Dibutylzinndiacetat zugegeben und nochmals 5 min homogenisiert. Die erhaltene Paste zeigte nach dem Aushärten über 7 Tage bei 23 °C und 50 % relativer Luftfeuchtigkeit die folgenden Kennwerte: Zugfestigkeit 1,54 MPa, Spannung bei 100 % Dehnung 0,39 MPa, Reißdehnung 620 %, Härte 18 Shore-A, Volumenschwund 7,8 % (nach DIN 52 451 Teil 1).

### Beispiel 2

1400 g eines α,ω-Dihydroxypolydimethylsiloxans mit einer Viskosität von 80.000 mPas (bei 25 °C), 600 g eines Kohlenwasserstoffgemisches mit einer kinematischen Viskosität von 6,2 mm²/s (bei 40 °C), einer Viskositäts-Dichte-Konstante (VDK) von 0,79 und einem Siedebereich von 300 °C bis 370 °C (Kohlenstoffverteilung 62 % paraffinische, 38 % naphthenische und 0,03 % aromatische Kohlenstoffatome), 70 g Methyltris(methylethylketoximo)silan, 20 g Vinyltris(methylethylketoximo)silan und 200 g einer pyrogenen Kieselsäure mit einer spezifischen Oberfläche von 150 m²/g wurden in einem Planetenmischer homogen im Vakuum vermischt. Anschließend wurden 1,5 g Dibutylzinndiacetat zugegeben und nochmals 5 min homogenisiert. Die erhaltene Paste zeigte nach dem Aushärten über 7 Tage bei 23 °C und 50 % relativer Luftfeuchtigkeit die folgenden Kennwerte: Zugfestigkeit 1,45 MPa, Spannung bei 100 % Dehnung 0,35 MPa, Reißdehnung 650 %, Härte 17 Shore-A, Volumenschwund 8,8 % (nach DIN 52 451 Teil1).

### Beispiel 3

1400 g eines α,ω-Bis(dimethoxymethylsiloxy)polydimetliylsiloxans mit einer Viskosität von 50 000 mPas (bei 25 °C), 600g eines Kohlenwasserstoffgemisches mit einer kinematischen Viskosität von 6,2 mm²/s bei 40 °C, einer Viskositäts-Dichte-Konstante (VDK) von 0,79 und einem Siedebereich von 300 °C bis 370 °C (Kohlenstoffverteilung 62 % paraffinische, 38 % naphthenische und 0,03 % aromatische Kohlenstoffatome), 80 g Methyltrimethoxysilan, 60 g Bis(ethylacetoacetato)diisobutyltitanat, 200 g einer pyrogenen Kieselsäure mit einer spezifischen Oberfläche von 150 m²/g und 2400 g einer mit Stearinsäure beschichteten gemahlenen Kreide wurden in einem Planetenmischer homogen im Vakuum vermischt. Die erhaltene Paste zeigte nach dem Aushärten über 7 Tage bei 23 °C und 50 % relativer Luftfeuchtigkeit die folgenden Kennwerte: Zugfestigkeit 1,12 MPa, Spannung bei 100 % Dehnung 0,45 MPa, Reißdehnung 556 %, Härte 28 Shore-A, Volumenschwund 5,6 % (nach DIN 52 451 Teil1).

### Beispiel 4

1300 g eines α,ω-Dihydroxypolydimethylsiloxans mit einer Viskosität von 80 000 mPas (bei 25 °C), 700 g eines Kohlenwasserstoffgemisches mit einer kinematischen Viskosität von 5,3 mm²/s (bei 40 °C), einer Viskositäts-Dichte-Konstante (VDK) von 0,786 und einem Siedbeginn oberhalb 300 °C (Kohlenstoffverteilung 75 % paraffinische, 24 % naphthenische und 1 % aromatische Kohlenstoffatome), 90 g Ethyltriacetoxysilan und 190 g einer pyrogenen Kieselsäure mit einer spezifischen Oberfläche von 150 m²/g wurden in einem Planetenmischer homogen im Vakuum vermischt. Anschließend wurden 0,5 g Dibutylzinndiacetat zugegeben und nochmals 5 min homogenisiert. Die erhaltene Paste zeigte nach dem Aushärten über 7 Tage bei 23 °C und 50 % relativer Luftfeuchtigkeit die folgenden Kennwerte: Zugfestigkeit 1,35 MPa, Spannung bei 100 % Dehnung 0,30 MPa, Reißdehnung 680 %, Härte 16 Shore-A, Volumenschwund 9,7 % (nach DIN 52 451 Teil1).

## Patentansprüche

1. RTV-Siliconkautschuk-Mischungen, **dadurch gekennzeichnet, dass** als Weichmacher paraffinische Kohlenwasserstoffgemische in Mengen von 5 bis 30 Gew.-% verwendet werden, welche eine kinematische Viskosität von 5 mm²/s bis 10 mm²/s, gemessen bei 40°C, eine Viskositäts-Dichte-Konstante (VDK) kleiner 0,82 und einen Siedebeginn oberhalb 290°C aufweisen sowie 60 bis 80% paraffinische, 20 bis 40% naphthenische und maximal 1 % aromatische Kohlenstoffatome und α,ω-Dihydroxypolydimethylsiloxane mit Viskositäten zwischen 500 mPas und 350 000 mPas. enthalten.

## Claims

1. RTV silicone rubber mixtures **characterized in that** the plasticizer used comprises amounts of from 5 to 30% by weight of paraffinic hydrocarbon mixture whose kinematic viscosity, measured at 40°C, is from 5 to 10 mm²/s, and whose viscosity-density constant (VDC) is less than 0.82, and whose initial boiling point is above 290°C, and which also contains from 60 to 80% of paraffinic, from 20 to 40% of naphthenic, and at most 1% of aromatic, carbon atoms, and which contain α,ω-dihydroxypolydimethylsiloxanes with viscosities of from 500 mPas to 350 000 mPas.

## Revendications

1. Mélanges de caoutchouc siliconé durcissables à température ambiante, **caractérisés en ce qu'**on utilise comme plastifiants des mélanges d'hydrocarbures parafiniques en des quantités de 5 à 30 % en poids, qui présentent une viscosité cinématique de 5 mm²/s à 10 mm² /s, mesurée à 40°C, une constante viscosité-densité (VDK) inférieure à 0,82 et un début d'ébullition au-delà de 290°C et contiennent 60 à 80% d'atomes de carbone paraffiniques, 20 à 40% d'atomes de carbone naphténiques et au maximum 1% d'atomes de carbone aromatiques et des α-ω-dihydroxypolydiméthylsiloxanes présentant des viscosités entre 500 mPa.s et 350 000 mPa.s.
